# EUROPÄISCHE PATENTSCHRIFT

(11) **EP 3 521 358 B1**
(45) Veröffentlichungstag und Bekanntmachung des Hinweises auf die Patenterteilung: **10.11.2021**
(21) Anmeldenummer: 18154853.8
(22) Anmeldetag: 02.02.2018
(51) Int. Cl.: B60C 1/00, B60C 11/02, C08K 5/39, C08K 5/40, C08L 7/00, C08L 21/00

(54) **VERWENDUNG EINER VERNETZBAREN VERBINDUNGSKAUTSCHUKMISCHUNG BEI DER KALTRUNDERNEUERUNG VON FAHRZEUGREIFEN**
USE OF A CROSSLINKABLE COMPOUND RUBBER COMPOSITION FOR THE COLD RETREADING OF A TYRE
UTILISATION D'UN MÉLANGE DE COMPOSÉS DE CAOUTCHOUC RÉTICULABLE POUR LE RECHAPAGE À FROID D'UN PNEUMATIQUE

(43) Veröffentlichungstag der Anmeldung: 07.08.2019
(73) Patentinhaber: Continental Reifen Deutschland GmbH, 30165 Hannover (DE)
(72) Erfinder: De Risi, Francesca Romana, 30161 Hannover (DE); Bottero, Ilaria, 30171 Hannover (DE); Große, Julia, 30926 Seelze (DE); Weinreich, Hajo, 31552 Apelern (DE)
(74) Vertreter: Continental Corporation

(56) Entgegenhaltungen:
- EP-A1- 1 000 968
- EP-A1- 1 533 336
- EP-A1- 2 517 899
- EP-A1- 2 952 538
- DE-T2- 69 519 207

## Beschreibung

Die Erfindung betrifft die Verwendung einer vernetzbaren Verbindungskautschukmischung bei der Kaltrunderneuerung von Fahrzeugreifen.

Zur Schonung von Umwelt und Ressourcen kann man Fahrzeugreifen, und bei diesen vor allem LKW-Reifen, runderneuern. Beim Prozess der Runderneuerung wird bei dem abgefahrenen Reifen die abgenutzte Lauffläche maschinell abgeraut (oder mit Messern abgeschält), eine neue Lauffläche aufgelegt und anschließend vulkanisiert. Diese Methode ist in der Herstellung bis zu einem Drittel preisgünstiger als die Herstellung eines Neureifens, da der Reifentorus mit Wulst, Seitenwand, Karkasse und Gürtel wiederverwendet werden kann.

Es sind derzeit zwei Verfahren zur Runderneuerung in der Anwendung.

Die erste ist die sogenannte Heißrundereneuerung, bei der ein neuer, unvulkanisierter Laufstreifen ohne Profil auf den abgerauten Altreifen aufgelegt wird und im Anschluss durch Vulkanisation in einer Form unter Druck bei Temperaturen um die 150 °C der Laufstreifen mit dem Altreifen zusammenvulkanisiert und gleichzeitig profiliert wird.

Das zweite Verfahren ist die sogenannte Kaltrunderneuerung. Bei der Kaltrunderneuerung wird nach dem Entfernen der alten Lauffläche eine vulkansierbare Kautschukmischung, die sogenannte Verbindungskautschukmischung (Bindekautschuk, engl. cushion gum) mit Hilfe einer Extrudiervorrichtung aufgebracht. Darauf wird ein bereits vulkanisierter und profilierter Laufstreifen appliziert. In einem darauf folgenden Vulkanisiationsschritt reagiert dann die Verbindungskautschukmischung und stellt die Verbindung aus (erneuerter) Karkasse und (neuem) Laufstreifen her. Dieser letzte Vulkanisationsschritt, der notwendig ist um die Verbindungskautschukmischung abreagieren zu lassen, belastet jedoch thermisch alle bereits ausvulkanisierten Komponenten des Reifens, also unter anderem die Karkasse und den Laufstreifen. Daher sollte die Reaktionszeit/Vulkanisationszeit der Verbindungskautschukmischung so kurz wie möglich sein. Dies steht jedoch in direktem Zielkonflikt mit der Applikationssicherheit der Verbindungskautschukmischung beim Auftragen, da dort ja möglichst keine Reaktivität gewünscht ist. Eine verfrühte Reaktion der Verbindungskautschukmischung würde zu mehr Abfall und einer schwachen Verbindung zwischen Karkasse und Laufstreifen führen. Um zum einen eine rasche Vulkanisation der Verbindungskautschukmischung bei niedriger Vulkanisationstemperatur mit einer hohen Vernetzungsausbeute zu erzielen und zum anderen eine zu frühe Vulkanisation der Verbindungskautschukmischung unter normalen Bedingungen bei der Aufbewahrung und dem Transport zu verhindern, ist es aus der DE 695 19 207 T3 bekannt, dass die Verbindungskautschukmischung Mercaptobenzothiazol (MBT), Diphenylguanidin (DPG) und Zink-Dibenzyldithiocarbamat (ZBEC) enthält. Diese Beschleuniger weisen eine Schmelztemperatur von mehr als 130 °C auf.

Ein Verfahren zur Herstellung einer vernetzbaren Kautschukmischung ist aus der Patentanmeldeschrift EP 2 952 538 A1 bekannt.

Der vorliegenden Erfindung liegt die Aufgabe zugrunde, ein Verfahren zur Herstellung einer vernetzbaren Verbindungskautschukmischung der eingangs genannten Art zur Verfügung zu stellen, bei dem die Verbindungskautschukmischung unter Transport- und Lagerbedingungen nahezu inaktiv ist, sobald sie jedoch im Verbindungsprozess, wie der Runderneuerung, appliziert wird, eine feste Verbindung zwischen den Bauteilen, insbesondere der Karkasse und dem Laufstreifen, gewährleistet. Das Verfahren soll diese Eigenschaften weiter verbessern.

Gelöst wird die Aufgabe erfindungsgemäß durch die Verwendung einer vernetzbaren Verbindungskautschukmischung bei der Kaltrundernerung von Fahrzeugreifen nach Anspruch 1, wobei die Verbindungskautschukmischung zumindest einen Vulkanisationsbeschleuniger mit einer Schmelztemperatur > 130 °C aufweist, und wobei die Verbindungskautschukmischung nach einem Verfahren mit zumindest folgenden Schritten hergestellt ist:
- Erstellen einer Grundmischung der Verbindungskautschukmischung ohne Vulkanisationschemikalien und
- Erstellen einer Fertigmischung der Verbindungskautschukmischung durch Zugabe der Vulkanisationschemikalien bei Temperaturen von weniger als 110 °C in einem Innenmischer mit einem Mischzeitraum von weniger als 5 min.

Eine Grundmischung enthält alle Bestandteile der Kautschukmischung mit Ausnahme des Vulkanisationssystems. Eine Fertigmischung enthält auch das Vulkanisationssystem, in der Regel bestehend aus Schwefel und Beschleuniger.

Die Erfindung löst den Zielkonflikt zwischen den vorgenannten Eigenschaften durch ein Zusammenspiel eines Mischprozesses mit der spezifischen Eigenschaft der Schmelztemperatur des Beschleunigersystems. Dadurch, dass man die Fertigmischung der Verbindungskautschukmischung nur bei Temperaturen unterhalb des Schmelzpunktes der Vulkanisationsbeschleuniger herstellt, stellt man sicher, dass die Beschleuniger in der Fertigmischstufe zwar distributiert (grob verteilt), jedoch nicht dispergiert (feinverteilt) oder gar gelöst werden. Dies führt dazu, dass die Beschleuniger nach der Herstellung der Fertigmischung zwar global homogen in der Verbindungskautschukmischung verteilt sind, lokal jedoch noch sehr inhomogen vorliegen. Die lokale Distanz zwischen Schwefel und Beschleuniger ist dadurch hoch, so dass eine Reaktion der beiden Partner statistisch nicht sehr wahrscheinlich ist. Dies führt zu einer hohen Lagerstabilität und Sicherheit vor einer frühzeitigen Anvulkanisation (Scorch). Wird die Fertigmischung jedoch bei der weiteren Verarbeitung, wie der Runderneuerung, einem weiteren Extrusionsschritt unterworfen, so führt dieser zusätzliche Energieeintrag dazu, dass die Vulkanisationsbeschleuniger beginnen, sich aufzulösen und somit die Verbindungskautschukmischung aktiviert wird.

Bei der sich anschließenden Vulkanisation reagiert die Mischung dann schnell und vollständig ab und gewährleistet die gute Verbindung der Bauteile.

Die Verbindungskautschukmischung enthält übliche Kautschukmischungsbestandteile. Zu denen zählen die im Folgenden genannten.

Die Verbindungskautschukmischung enthält Kautschuke, wie Dienkautschuke. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem wenigstens einen Dienkautschuk handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-DienKautschuk und/oder Nitril-Kautschuk und/oder Chloropren-Kautschuk und/oder AcrylatKautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk. Bevorzugt handelt es sich bei dem oder den Dienkautschuk(en) jedoch um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk).

Die Verbindungskautschukmischung kann unterschiedliche Füllstoffe, wie Ruß, Kieselsäure, Alumosilicate, Kreide, Stärke, Magnesiumoxid, Kohlenstoffnanoröhrchen, Graphit und Graphene, Titandioxid, "carbon-silica dual-phase filler" oder Kautschukgele, in üblichen Gewichtsteilen enthalten.

Des Weiteren kann die Verbindungskautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Weichmacher, wie aromatische, naphthenische oder paraffinische Mineralölweichmacher,
b) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
c) Aktivatoren, wie z. B. Zinkoxid und Fettsäuren (z. B. Stearinsäure) oder Zinkkomplexe wie z. B. Zinkethylhexanoat,
d) Wachse,
e) Mastikationshilfsmittel, wie z. B. 2,2'-Dibenzamidodiphenyldisulfid (DBD) und
f) Verarbeitungshilfsmittel, wie z. B. Fettsäuresalze, wie z. B. Zinkseifen, und Fettsäureester und deren Derivate.

Beim Erstellen der Fertigmischung werden der Verbindungskautschukmischung die Vulkanisationschemikalien zugegeben. Zu diesen zählen Schwefel und/oder Schwefelspender und Vulkanisationsbeschleuniger sowie ggf. Vulkanisationsverzögerer.

Gemäß der Erfindung enthält die Verbindungskautschukmischung zumindest einen Vulkanisationsbeschleuniger, dessen Schmelztemperatur > 130 °C ist. Dabei kann der Vulkanisationsbeschleuniger ausgewählt sein aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist der zumindest eine Vulkanisationsbeschleuniger ausgewählt aus der Gruppe bestehend aus Mercaptobenzothiazol (MBT), Diphenylguanidin (DPG) und Zink-Dibenzyldithiocarbamat (ZBEC).

Es können auch mehrere Vulkanisationsbeschleuniger gleichzeitig eingesetzt werden. Vorzugsweise weisen dann alle Vulkanisationsbeschleuniger in der Verbindungskautschukmischung eine Schmelztemperatur > 130 °C auf.

Um die Lagerstabilität der Verbindungskautschukmischung weiter zu erhöhen, hat es sich als vorteilhaft erwiesen, wenn die Verbindungskautschukmischung zumindest einen Vulkanisationsbeschleuniger enthält, dessen Schmelztemperatur > 140 °C, vorzugsweise > 150 °C, ist.

Gemäß einer vorteilhaften Weiterbildung der Erfindung wird die Fertigmischung der Verbindungskautschukmischung durch Zugabe der Vulkanisationschemikalien bei Temperaturen von weniger als 100 °C, vorzugsweise weniger als 95 °C, in einem Innenmischer erstellt. Auf diese Weise wird eine zu gleichmäßige Dispersion oder gar ein lösen der Vulkanisationschemikalien noch besser verhindert und die Lagerstabilität weiter erhöht.

Eine weitere Verbesserung der Lagerstabilität der Verbindungskautschukmischung kann auch erzielt werden, dass die Fertigmischung der Verbindungskautschukmischung durch Zugabe der Vulkanisationschemikalien in einem Innenmischer mit einem Mischzeitraum von weniger als 4 min, vorzugsweise weniger als 3,5 min, erstellt wird. Dies kann auch bei Temperaturen von weniger als 100 °C bzw. 95 °C erfolgen.

Die nach dem beschriebenen Verfahren hergestellten vernetzbaren Verbindungskautschukmischungen können zur Verbindung unterschiedlichster vulkanisierter und/oder nicht vulkanisierter Kautschukbauteile, wie Schuhsohlen oder Gummimatten, verwendet werden. Erfindungsgemäß wird die nach dem Verfahren hergestellte vernetzbare Verbindungskautschukmischung bei der Kaltrunderneuerung von Fahrzeugreifen, wie LKW- oder PKW-Reifen, eingesetzt. Dort bietet die hohe Lagerstabilität bei anschließender fester Verbindung zwischen den Bauteilen Karkasse und Laufstreifen besondere Vorteile.

Die Erfindung soll nun anhand von Vergleichs- und Ausführungsbeispielen, die in der Tabelle 1 zusammengefasst sind, näher erläutert werden.

Es wurde eine Verbindungskautschukmischung mit folgenden Bestandteilen nach unterschiedlichen Verfahren hergestellt:

| | |
|---|---|
| Naturkautschuk | 100 phr |
| Ruß N339 | 42,5 phr |
| Weichmacher | 23 phr |
| Zinkoxid | 5 phr |
| Alterungsschutzmittel | 5 phr |
| Klebharz | 2 phr |
| MBT | 0,5 phr |
| DPG | 0,5 phr |
| ZBEC | 0,5 phr |
| Schwefel | 4,8 phr |

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die drei Vulkanisationsbeschleuniger MBT, DPG und ZBEC weisen alle eine Schmelztemperatur von mehr als 130 °C auf.

Verfahren für M(1): Nach Herstellung einer Grundmischung in üblicher Weise wurde die Verbindungskautschukmischung M(1) durch Zugabe des Beschleunigersystems aus MBT, DPG, ZBEC und Schwefel mit Hilfe eines konventionellen Fertigmischprozesses in einem Innenmischer bei Temperaturen von ca. 110 °C über einen Mischzeitraum von 160 s fertig gemischt.

Verfahren für M(2): Nach Herstellung einer Grundmischung in üblicher Weise wurde die Verbindungskautschukmischung M(2) durch Zugabe des Beschleunigersystems aus MBT, DPG, ZBEC und Schwefel mit Hilfe eines Fertigmischprozesses in einem Innenmischer bei Temperaturen von ca. 90 °C über einen Mischzeitraum von 3 min fertig gemischt.

Verfahren für M(3): Die Verbindungskautschukmischung M(2) wurde extrudiert, wie es für die Aufbringung auf eine abgeraute Karkasse üblich ist.

Aus diesen nach den vorgenannten Verfahren hergestellten

Verbindungskautschukmischungen wurden Prüfkörper durch 10-minütige Vulkanisation unter Druck bei 140 °C hergestellt und mit diesen Prüfkörpern
- der Abstand der Netzknoten als Maß für die Vernetzungsdichte (je größer der Abstand, desto geringer die Vernetzungsdichte) nach Gleichgewichtsquellung in Cyclohexan mittels DSC-Messung,
- der komplexe Modul E^{∗} bei 55 °C und einer Dehnung von 0,15 % und 12 % aus dynamisch-mechanischer Messung in Anlehnung an DIN 53 513, Dehnungsdurchlauf (engl. "strain sweep") bei einer Vorkompression von 20 %, einer Frequenz von 10 Hz und einem Dehnungsbereich zwischen 0,15 % und 12 % sowie
- der Verlustfaktor tan δₘₐₓ bei 55 °C als Maximalwert über den Dehnungsdurchlauf (engl. "strain sweep") bei einer Vorkompression von 20 %, einer Frequenz von 10 Hz und einem Dehnungsbereich zwischen 0,15 % und 12 % bestimmt.

**Tabelle 1**

| **Eigenschaften** | Einheit | M(1) | M(2) | M(3) |
|---|---|---|---|---|
| Abstand der Netzknoten | nm | 5,7 | 18,8 | 5,8 |
| E* bei 0,15 % Dehnung | MPa | 5,2 | 3,3 | 5,3 |
| E* bei 12 % Dehnung | MPa | 3,9 | 2,0 | 3,8 |
| tan δₘₐₓ | - | 0,08 | 0,18 | 0,08 |

Die Verbindungsgummimischung M(1) ist mit seinen Vulkanisatparametern (Referenzwerte) für die Kaltrunderneuerung geeignet, allerdings zeigt diese Mischung die Tendenz, schon bei Lagerung und Transport zu reagieren.

Bei der Verbindungsmischung M(2), die nach dem erfindungsgemäßen Verfahren bei niedrigerer Temperatur und kürzerer Zeit gemischt wurde, sind der Netzknotenabstand und der tan δₘₐₓ hoch und der komplexe Modul E^{∗} ist niedrig, dies dient als Beleg für eine geringe Vernetzungsdichte. Diese Werte dienen als Indikator für eine inaktive Mischung mit schwacher Vernetzungstendenz, die gut gelagert und sicher weiter verarbeitet werden kann.

Wird die Mischung M(2) dann jedoch extrudiert zur Mischung M(3), so erfolgt eine Aktivierung. Der zusätzliche Energieeintrag bei der Extrusion führt dazu, dass die Vulkanisationschemikalien beginnen, sich aufzulösen und besser in der Mischung zu verteilen. Die Mischung M(3) kann im Runderneuerungsprozess dann schnell und vollständig abreagieren und man gelangt zu den gleichen Vulkanisatparametern wie bei der Mischung M(1).

Eine nach dem Verfahren für die Verbindungsmischung M(2) hergestellte Mischung lässt sich demnach gut lagern und sicher applizieren und führt bei Verwendung in der Kaltrunderneuerung zu guten Haftungsergebnissen.

## Patentansprüche

1. Verwendung einer vernetzbaren Verbindungskautschukmischung bei der Kaltrunderneuerung von Fahrzeugreifen, wobei die Verbindungskautschukmischung zumindest einen Vulkanisationsbeschleuniger enthält, dessen Schmelztemperatur > 130 °C ist, und wobei die Verbindungskautschukmischung nach einem Verfahren mit zumindest folgenden Schritten hergestellt ist:
- Erstellen einer Grundmischung der Verbindungskautschukmischung ohne Vulkanisationschemikalien und
- Erstellen einer Fertigmischung der Verbindungskautschukmischung durch Zugabe der Vulkanisationschemikalien bei Temperaturen von weniger als 110 °C in einem Innenmischer mit einem Mischzeitraum von weniger als 5 min.

2. Verwendung nach Anspruch 1, **dadurch gekennzeichnet, dass** der zumindest eine Vulkanisationsbeschleuniger ausgewählt ist aus der Gruppe bestehend aus Mercaptobenzothiazol, Diphenylguanidin und Zink-Dibenzyldithiocarbamat.

3. Verwendung nach Anspruch 1 oder 2, **dadurch gekennzeichnet, dass** die Verbindungskautschukmischung zumindest einen Vulkanisationsbeschleuniger enthält, dessen Schmelztemperatur > 140 °C, vorzugsweise > 150 °C, ist.

4. Verwendung nach zumindest einem der vorhergehenden Ansprüche, **dadurch gekennzeichnet, dass** die Fertigmischung der Verbindungskautschukmischung durch Zugabe der Vulkanisationschemikalien bei Temperaturen von weniger als 100 °C, vorzugsweise weniger als 95 °C, in einem Innenmischer erstellt wird.

5. Verwendung nach zumindest einem der vorhergehenden Ansprüche, **dadurch gekennzeichnet, dass** die Fertigmischung der Verbindungskautschukmischung durch Zugabe der Vulkanisationschemikalien in einem Innenmischer mit einem Mischzeitraum von weniger als 4 min, vorzugsweise weniger als 3,5 min, erstellt wird.

## Claims

1. Use of a crosslinkable bonding rubber mixture for cold retreading of vehicle tyres, wherein the bonding rubber mixture contains at least one vulcanization accelerator having a melt temperature >130°C and wherein the bonding rubber mixture is produced by a process comprising at least the following steps of:
- preparing a base mixture of the bonding rubber mixture without vulcanization chemicals and
- preparing a ready-to-use mixture of the bonding rubber mixture by addition of the vulcanization chemicals at temperatures of less than 110°C in an internal mixer at a mixing duration of less than 5 min.

2. Use according to Claim 1, **characterized in that** the at least one vulcanization accelerator is selected from the group consisting of mercaptobenzothiazole, diphenylguanidine and zinc dibenzyldithiocarbamate.

3. Use according to Claim 1 or 2, **characterized in that** the bonding rubber mixture contains at least one vulcanization accelerator having a melt temperature >140°C, preferably >150°C.

4. Use according to at least one of the preceding claims, **characterized in that** the ready-to-use mixture of the bonding rubber mixture is prepared in an internal mixer by addition of the vulcanization chemicals at temperatures of less than 100°C, preferably less than 95°C.

5. Use according to at least one of the preceding claims, **characterized in that** the ready-to-use mixture of the bonding rubber mixture is prepared by addition of the vulcanization chemicals in an internal mixer at a mixing duration of less than 4 min, preferably less than 3.5 min.

## Revendications

1. Utilisation d'un mélange de caoutchoucs de liaison réticulable lors du rechapage à froid de pneus de véhicules, le mélange de caoutchoucs de liaison contenant au moins un accélérateur de vulcanisation, dont la température de fusion est > 130 °C, et le mélange de caoutchoucs de liaison étant préparé selon un procédé comportant au moins les étapes suivantes :
- élaboration d'un mélange de base du mélange de caoutchoucs de liaison sans composés chimiques de vulcanisation et
- élaboration d'un mélange final du mélange de caoutchoucs de liaison par ajout des composés chimiques de vulcanisation à des températures inférieures à 110 °C dans un mélangeur interne avec un temps de mélange inférieur à 5 min.

2. Utilisation selon la revendication 1, **caractérisée en ce que** l'au moins un accélérateur de vulcanisation est choisi dans le groupe constitué par le mercaptobenzothiazole, la diphénylguanidine et le dibenzyldithiocarbamate de zinc.

3. Utilisation selon la revendication 1 ou 2, **caractérisée en ce que** le mélange de caoutchoucs de liaison contient au moins un accélérateur de vulcanisation, dont la température de fusion est > 140 °C, de préférence > 150 °C.

4. Utilisation selon au moins l'une des revendications précédentes, **caractérisée en ce que** le mélange final du mélange de caoutchoucs de liaison est élaboré par ajout des composés chimiques de vulcanisation à des températures inférieures à 100 °C, de préférence inférieures à 95 °C, dans un mélangeur interne.

5. Utilisation selon au moins l'une des revendications précédentes, **caractérisée en ce que** le mélange final du mélange de caoutchoucs de liaison est élaboré par ajout des composés chimiques de vulcanisation dans un mélangeur interne avec un temps de mélange inférieur à 4 min, de préférence inférieur à 3,5 min.
